(19) Europäisches Patentamt
European Patent Office
Office européen des brevets

(11) **EP 3 744 872 A1**

(12) **EUROPEAN PATENT APPLICATION**
published in accordance with Art. 153(4) EPC

(43) Date of publication:
**02.12.2020 Bulletin 2020/49**

(51) Int Cl.:
*C22C 38/00* (2006.01)   *C22C 38/60* (2006.01)
*C21D 8/06* (2006.01)   *C21D 9/00* (2006.01)

(21) Application number: **19744342.7**

(22) Date of filing: **25.01.2019**

(86) International application number:
**PCT/JP2019/002441**

(87) International publication number:
**WO 2019/146748 (01.08.2019 Gazette 2019/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.01.2018 JP 2018011105**

(71) Applicant: **NIPPON STEEL CORPORATION**
**Chiyoda-ku**
**Tokyo 100-8071 (JP)**

(72) Inventor: **KASHIMA, Kazuyuki**
**Tokyo 100-8071 (JP)**

(74) Representative: **Zimmermann & Partner**
**Patentanwälte mbB**
**Postfach 330 920**
**80069 München (DE)**

(54) **STEEL FOR MOORING CHAIN, AND MOORING CHAIN**

(57) This invention provides a steel for an anchor chain having a chemical composition consisting of, in mass%, C: 0.15 to 0.45%, Si: 0.6% or less, Mn: 1.00 to 2.50%, P: 0.1% or less, S: 0.05% or less, Al: 0.1% or less, N: 0.01% or less, Cu: 0.01 to 1.0%, Ni: 0.01 to 5.0%, Cr: 0.1% or less, Sn: 0 to 0.5%, Sb: 0 to 0.5%, Mo: 0 to 1.0%, W: 0 to 1.0%, V: 0 to 1.0%, Ca: 0 to 0.01%, Mg: 0 to 0.01%, REM: 0 to 0.01%, Nb: 0 to 0.1%, Ti: 0 to 0.1%, B: 0 to 0.01%, and the balance: Fe and impurities, and satisfying the formulas [(1-1.35Cu)(1-0.37Ni)+0.25Cr ≤ 0.80] and [Cu/Ni ≤ 5.0], and also provides an anchor chain that uses the steel for an anchor chain.

EP 3 744 872 A1

**Description**

TECHNICAL FIELD

The present invention relates to steel for an anchor chain, and an anchor chain.

BACKGROUND ART

Anchor chains are subjected to severe corrosion because they are exposed to a seawater environment, and corrosion may be a problem when an anchor chain is used for an extended period of time. When an anchor chain is inspected in a dock, the diameter of the anchor chain is measured, and a standard defined by classification society rules is that an anchor chain must be replaced with a new chain when the amount of decrease in the diameter of the anchor chain is 12% or more relative to the initial diameter.

Generally, the life of a ship is about 20 years, while the life of an anchor chain is about 15 years. Therefore, it is necessary to replace an anchor chain at least once before the ship is retired from service. Because of this situation, there is a need to extend the life of metal materials used for anchor chains by improving corrosion resistance thereof.

LIST OF PRIOR ART DOCUMENTS

PATENT DOCUMENT

Patent Document 1: JP61-210153A

SUMMARY OF INVENTION

TECHNICAL PROBLEM

Conventionally, industrial steel materials such as SBC300, SBC490, and SBC690 which are defined in JIS G 3105:2004 are used for anchor chains of ships. Further, in addition to these steel materials, in some cases a steel material is used whose material characteristics were improved by, for example, adding rare earth or the like as an optional element (see Patent Document 1).

However, in the case of the aforementioned steel materials, there is a problem that the durable lifetime of an anchor chain is short relative to the life of a ship as described above, and the desired corrosion resistance is not sufficiently obtained.

An objective of the present invention is to solve the above problem and provide a steel for an anchor chain and an anchor chain which are excellent in corrosion resistance.

SOLUTION TO PROBLEM

The present invention has been made to solve the problem described above, and the gist of the present invention is a steel for an anchor chain, and an anchor chain which are described hereunder.
(1) A steel for an anchor chain having a chemical composition consisting of, in mass%:

C: 0.15 to 0.45%,
Si: 0.6% or less,
Mn: 1.00 to 2.50%,
P: 0.1% or less,
S: 0.05% or less,
Al: 0.1% or less,
N: 0.01% or less,
Cu: 0.01 to 1.0%,
Ni: 0.01 to 5.0%,
Cr: 0.1% or less,
Sn: 0 to 0.5%,
Sb: 0 to 0.5%,
Mo: 0 to 1.0%,

W: 0 to 1.0%,
V: 0 to 1.0%,
Ca: 0 to 0.01%,
Mg: 0 to 0.01%,
REM: 0 to 0.01%,
Nb: 0 to 0.1%,
Ti: 0 to 0.1%,
B: 0 to 0.01%, and
a balance: Fe and impurities,
and satisfying formulas (i) and (ii) below:

$$(1\text{-}1.35\ Cu)(1\text{-}0.37\ Ni)+0.25Cr \le 0.80 \quad ...(i)$$

$$Cu/Ni \le 5.0 \quad ...(ii)$$

where, each symbol of an element in the above formulas represents a content (mass%) of the corresponding element that is contained in the steel, with a value of a symbol being taken as zero if the corresponding element is not contained.

(2) The steel for an anchor chain according to (1) above, wherein the chemical composition contains, in mass%, one or more elements selected from:

Sn: 0.01 to 0.5%,
Sb: 0.01 to 0.5%,
Mo: 0.01 to 1.0%,
W: 0.01 to 1.0%,
V: 0.01 to 1.0%,
Ca: 0.0001 to 0.01%,
Mg: 0.0001 to 0.01%, and
REM: 0.0001 to 0.01%.

(3) The steel for an anchor chain according to (1) or (2) above, wherein the chemical composition contains, in mass%, one or more elements selected from:

Nb: 0.001 to 0.1%,
Ti: 0.001 to 0.1%, and
B: 0.0001 to 0.01%.

(4) An anchor chain that uses the steel according to any one of (1) to (3) above.
(5) The anchor chain according to (4) above, comprising an anti-corrosive coating layer on a surface of the anchor chain.

ADVANTAGEOUS EFFECTS OF INVENTION

According to the present invention, a steel for an anchor chain, and an anchor chain which have excellent corrosion resistance can be obtained.

DESCRIPTION OF EMBODIMENTS

The present inventor conducted studies to clarify the factors contributing to the fact that the durable lifetime of a steel material used for an anchor chain is shorter than the life of a ship and the desired corrosion resistance is not obtained.
The corrosion resistance performance of a steel material varies greatly depending on the corrosion environment in which the steel material is used. In other words, in some cases even a steel material that is evaluated as being excellent in corrosion resistance in a specific corrosion environment cannot exhibit corrosion resistance in a different corrosion environment. Therefore, first, the present inventor investigated the corrosion environment which anchor chains are used.

An anchor chain is immersed in seawater when the ship is moored in the waters off a port, and is stored in a storage compartment called a "chain locker" while the ship is sailing. Therefore, most of the time the anchor chain is kept stored inside a chain locker.

Therefore, the present inventor measured in detail the variations in temperature and relative humidity inside a chain locker while a ship is sailing. As a result, it has been revealed that, inside a chain locker, although a state of high humidity and a state of relatively low humidity are alternately repeated, the relative humidity does not fall below around 50% RH

In this connection, although the main component of seawater is generally sodium chloride, seawater also contains chlorides such as magnesium chloride in addition to sodium chloride. In particular, magnesium chloride has a strong deliquescent action, and for example easily takes in moisture from the atmosphere if the relative humidity is around 30% RH or higher.

That is, because magnesium chloride or the like that is adhered to an anchor chain takes in moisture from the atmosphere, a state in which the anchor chain is slightly wet is maintained, and a thin water film (in the following description, also referred to as "thin water film") is continuously formed on the surface of the chain. Further, chlorides contained in the seawater concentrate within the thin water film that is formed on the surface. In the environment in which chlorides are concentrated, when the steel material corrodes, a hydrolysis reaction of iron ions occurs at places where iron is eluted due to corrosion. As a result, the pH at the steel material surface decreases. Thus, it has been revealed that the usage environment of an anchor chain is a special corrosion environment that is an extremely severe corrosion environment.

It is necessary for a steel material used in an anchor chain to exhibit corrosion resistance in the aforementioned special corrosion environment. Therefore, when designing a steel material that is to be used for an anchor chain, it is necessary to reproduce the aforementioned corrosion environment and carry out an evaluation of the corrosion resistance. Based on the foregoing viewpoint, the present inventor developed a corrosion test method for steel for an anchor chain (see Japanese Patent Application No. 2017-240413). Furthermore, by evaluating the corrosion resistance of steel materials using the aforementioned corrosion test method, the present inventor has been able to impart favorable corrosion resistance to a steel for an anchor chain.

Further, when dropping anchor or weighing anchor, an anchor chain is subjected to wear caused by rubbing against sand or the like that is present on the surface of the sea floor. In addition, when being stored inside a chain locker, some portions of a single anchor chain rub against each other and are thereby subjected to wear. Thus, because an anchor chain is liable to be subjected to wear, it is also desirable for an anchor chain to have favorable wear resistance.

The present invention has been made based on the findings described above. The respective requirements of the present invention are described in detail hereunder.

1. Chemical Composition

The reasons for limiting each element are as follows. Note that, the symbol "%" with respect to content in the following description means "mass percent".

C: 0.15 to 0.45%

C is an element that is necessary in order to ensure strength and wear resistance. The content of C is 0.15% or more to ensure strength and wear resistance as an anchor chain. However, if the content of C is more than 0.45%, the toughness of the base metal and weld heat-affected zones may noticeably decrease. Therefore, the content of C is not more than 0.45%. The content of C is preferably 0.17% or more, and more preferably is 0.20% or more. Further, the content of C is preferably not more than 0.42%, and more preferably is not more than 0.40%.

Si: 0.6% or less

Although Si is an element that is necessary for deoxidation, if the content of Si is more than 0.6%, the toughness of weld heat-affected zones may decrease. Therefore, the content of Si is 0.6% or less. From the viewpoint of toughness, a lower content of Si is desirable. In this case, the content of Si is preferably not more than 0.55%, and more preferably is not more than 0.5%. On the other hand, if the content of Si is decreased excessively, a deoxidation effect may not be sufficiently obtained. Si is also an element that contributes to improving wear resistance. Therefore, the content of Si is preferably 0.01% or more.

Mn: 1.00 to 2.50%

Mn is an element that is necessary in order to ensure strength and wear resistance. To ensure the required strength and wear resistance, the content of Mn is 1.00% or more. However, if the content of Mn is more than 2.50%, the toughness may noticeably decrease. Therefore, the content of Mn is not more than 2.50%. The content of Mn is preferably 1.10% or more, more preferably is 1.15% or more, and further preferably is 1.20% or more. The content of Mn is still more preferably 1.25% or more, and even more preferably is 1.30% or more. Further, the content of Mn is preferably not more than 2.40%, and more preferably is not more than 2.30%.

P: 0.1% or less

P is an element that segregates at grain boundaries as an impurity, and thus causes the toughness to decrease. If the content of P is more than 0.1%, the toughness may noticeably decrease. Therefore, the content of P is not more than 0.1%. The lower the content of P is, the more preferable it is. The content of P is preferably not more than 0.08%, and more preferably is not more than 0.05%.

S: 0.05% or less

S is present as an impurity in the steel, and forms MnS. The MnS acts as a starting point for corrosion, and decreases corrosion resistance. Therefore, the content of S is 0.05% or less. The lower the content of S is, the more preferable it is. The content of S is preferably not more than 0.045%, and more preferably is not more than 0.04%.

Al: 0.1% or less

Al is an element that is necessary as a deoxidizer, and a deoxidation effect is obtained by containing Al. Further, Al combines with N to form AlN, and thereby refines the grains. However, if Al is contained in an amount that is more than 0.1%, it leads to a decrease in toughness. Therefore, the content of Al is 0.1% or less. Note that, the content of Al is preferably 0.08% or less, and more preferably is 0.06% or less. On the other hand, in order to stably obtain the aforementioned effect, the content of Al is preferably 0.005% or more.

N: 0.01% or less

N combines with Al to form AlN, and thus has an effect of refining the grains. However, if the content of N is more than 0.01%, the toughness may decrease. Therefore, the content of N is 0.01% or less. The content of N is preferably 0.008% or less, and more preferably is 0.006% or less. On the other hand, to obtain the aforementioned effect, the content of N is preferably 0.001% or more.

Cu: 0.01 to 1.0%

Cu inhibits dissolution of steel in a state in which the surface is wet. In addition, Cu also noticeably inhibits dissolution of steel in a state in which a thin water film is formed and chlorides concentrate therein. Thus, Cu enhances corrosion resistance. Further, because the protectability with respect to corrosion products that are formed due to corrosion is high, Cu also has an effect that maintains high corrosion resistance over an extended period. In addition, Cu has an effect that improves wear resistance.

By containing Cu in an amount that is 0.01% or more, the aforementioned effects can be obtained. Therefore, the content of Cu is 0.01% or more. However, if the content of Cu is more than 1.0%, not only may the effects be saturated, but the toughness may also decrease. Therefore, the content of Cu is not more than 1.0%. The content of Cu is preferably 0.03% or more, and more preferably is more than 0.05%, and further preferably is 0.1% or more. Further, the content of Cu is preferably not more than 0.8%, and more preferably is not more than 0.6%.

Ni: 0.01 to 5.0%

Similarly to Cu, Ni noticeably inhibits dissolution of steel under a thin water film, and thus has an effect that enhances corrosion resistance. Therefore, the content of Ni is 0.01% or more. However, if the content of Ni is more than 5.0%, not only may the effect be saturated, but the cost of the steel material may also increase. Therefore, the content of Ni is not more than 5.0%. The content of Ni is preferably 0.05% or more, and more preferably is 0.1% or more. Further, the content of Ni is preferably not more than 4.5%, and more preferably is not more than 4.0%.

Cr: 0.1% or less

Although Cr has an action that increases the strength of the steel material while suppressing an increase in cost, Cr causes the corrosion resistance to noticeably decrease under a thin water film in which chlorides concentrate. Therefore, the content of Cr is not more than 0.1%. The content of Cr is preferably not more than 0.08%, and more preferably is not more than 0.06%.

In addition to the aforementioned components, one or more elements selected from Sn, Sb, Mo, W, V, Ca, Mg and REM may be contained in the steel for an anchor chain according to the present invention.

Sn: 0 to 0.5%

Under a thin water film and the pH at the steel surface decreases, Sn dissolves as an ion and noticeably suppresses dissolution of the steel by an inhibitor action. Thus, Sn has an effect that enhances corrosion resistance. Further, Sn also has an effect that enhances wear resistance. Therefore, Sn may be contained as necessary.

However, if Sn is contained in an amount that is more than 0.5%, the toughness may noticeably decrease. Therefore, the content of Sn is not more than 0.5%. Further, the content of Sn is preferably not more than 0.4%. On the other hand, to obtain the aforementioned effects, the content of Sn is preferably 0.01% or more, more preferably is 0.03% or more, and further preferably is 0.05% or more.

Sb: 0 to 0.5%

Similarly to Sn, Sb has an effect that inhibits dissolution of steel under a thin water film. Therefore, Sb may be contained as necessary. However, if Sb is contained in an amount that is more than 0.5%, the toughness may noticeably decrease. Therefore, the content of Sb is not more than 0.5%. The content of Sb is preferably not more than 0.4%, and more preferably is not more than 0.3%. On the other hand, to obtain the aforementioned effect, the content of Sb is preferably 0.01% or more, more preferably is 0.03% or more, and further preferably is 0.05% or more.

Mo: 0 to 1.0%

Mo has an action that increases the strength and wear resistance. Further, in a corrosion environment, eluted Mo forms molybdate ions and thus Mo has an action that suppresses dissolution of steel by an inhibitor action. Thus, Mo has an action that enhances corrosion resistance, and therefore may be contained as necessary.

However, if the content of Mo is more than 1.0%, not only may the effects be saturated, but the toughness may also decrease noticeably. Therefore, the content of Mo is not more than 1.0%. The content of Mo is preferably not more than 0.8%, and more preferably is not more than 0.5%. On the other hand, to obtain the aforementioned effects, the content of Mo is preferably 0.01% or more, more preferably is 0.03% or more, and further preferably is 0.05% or more.

W: 0 to 1.0%

W has a similar effect to Mo. In a corrosion environment, eluted W forms tungstate ions and thus has an effect that inhibits elution of the steel. Therefore, W may be contained as necessary.

However, if the content of W is more than 1.0%, not only may the effect be saturated, but the toughness may also decrease. Therefore, the content of W is not more than 1.0%. The content of W is preferably not more than 0.8%, and more preferably is not more than 0.5%. On the other hand, to obtain the aforementioned effect, the content of W is preferably 0.01% or more, more preferably is 0.03% or more, and further preferably is 0.05% or more.

V: 0 to 1.0%

V also has a similar effect to Mo. In a corrosion environment, eluted V forms vanadate ions and thus has an effect that inhibits elution of the steel. Therefore, V may be contained as necessary.

However, if the content of V is more than 1.0%, not only may the effect be saturated, but the toughness may also decrease. Therefore, the content of V is not more than 1.0%. The content of V is preferably not more than 0.8%, and more preferably is not more than 0.5%. On the other hand, to obtain the aforementioned effect, the content of V is preferably 0.01% or more, more preferably is 0.03% or more, and further preferably is 0.05% or more.

Ca: 0 to 0.01%

Ca dissolves as an ion, and increases the pH at a steel surface at which a decrease in pH occurred. As a result, corrosion is inhibited, and for this reason Ca may be contained as necessary. However, if the content of Ca is more than 0.01%, not only may the effect be saturated, but the toughness may also decrease. Therefore, the content of Ca is not more than 0.01%. The content of Ca is preferably not more than 0.008%, and more preferably is not more than 0.006%. On the other hand, to obtain the aforementioned effect, the content of Ca is preferably 0.0001% or more, more preferably is 0.0003% or more, and further preferably is 0.0005% or more.

Mg: 0 to 0.01%

Similarly to Ca, Mg has an effect of inhibiting corrosion by raising the pH at the steel surface. Therefore, Mg may be contained as necessary. However, if the content of Mg is more than 0.01%, not only may the effect be saturated, but the toughness may also decrease. Therefore, the content of Mg is not more than 0.01%. The content of Mg is preferably not more than 0.008%, and more preferably is not more than 0.006%. On the other hand, to obtain the aforementioned effect, the content of Mg is preferably 0.0001% or more, more preferably is 0.0003% or more, and further preferably is 0.0005% or more.

REM: 0 to 0.01%

Similarly to Ca and Mg, REM has an effect of inhibiting corrosion by raising the pH at the steel surface, and therefore REM may be contained as necessary. However, if the content of REM is more than 0.01%, not only may the effect be saturated, but the toughness also decreases. Therefore, the content of REM is not more than 0.01%. The content of REM is preferably not more than 0.008%, and more preferably is not more than 0.006%. On the other hand, to obtain the aforementioned effect, the content of REM is preferably 0.0001% or more, more preferably is 0.0003% or more, and further preferably is 0.0005% or more.

In the present invention, the term "REM" refers to a total of 17 elements that are Sc, Y and the lanthanoids, and the aforementioned content of REM means the total content of these elements. In industrial use, the REM is added in the form of misch metal.

In addition to the aforementioned components, one or more elements selected from Nb, Ti and B may also be contained in the steel for an anchor chain according to the present invention.

Nb: 0 to 0.1%

Nb has an action that increases the strength of the steel, and therefore Nb may be contained as necessary. However, if the content of Nb is more than 0.1%, the toughness may decrease. Therefore, the content of Nb is 0.1% or less. The content of Nb is preferably not more than 0.08%, and more preferably is not more than 0.05%. On the other hand, to obtain the aforementioned effect, the content of Nb is preferably 0.001% or more, more preferably is 0.003% or more, and further preferably is 0.005% or more.

Ti: 0 to 0.1%

Ti enhances the toughness of weld heat-affected zones by combining with N to form TiN. Therefore, Ti may be contained as necessary. However, if the content of Ti is more than 0.1%, the effect may be saturated. Therefore, the content of Ti is not more than 0.1%. The content of Ti is preferably not more than 0.08%, and more preferably is not more than 0.05%. On the other hand, to obtain the aforementioned effect, the content of Ti is preferably 0.001% or more, more preferably is 0.005% or more, and further preferably is 0.01% or more.

B: 0 to 0.01%

B has an action that increases the strength of the steel, and hence B may be contained as necessary. However, if the content of B is more than 0.01%, the toughness may decrease. Therefore, the content of B is 0.01% or less. The content of B is preferably not more than 0.008%, and more preferably is not more than 0.005%. On the other hand, to obtain the aforementioned effect, the content of B is preferably 0.0001% or more, more preferably is 0.0003% or more, and further preferably is 0.0005% or more.

In the chemical composition of the present invention, the balance is Fe and impurities. Here, the term "impurities" refers to components which, during industrial production of the steel, are mixed in from raw material such as ore or scrap or due to various factors in the production process, and which are allowed within a range that does not adversely affect the present invention.

As described above, in the present invention, to ensure corrosion resistance, it is necessary to appropriately control the content of Cu and Ni. Further, in the present invention, with respect to Cr that causes corrosion resistance to decrease in a state in which a thin water film is formed, it is necessary to appropriately control the content of the Cr. In the composition of the present invention, taking into consideration the interaction between these elements also, it is necessary for the following formula (i) to be satisfied.

$$(1-1.35Cu)(1-0.37Ni)+0.25Cr \leq 0.80 \quad ...(i)$$

The above formula (i) represents the corrosion resistance performance of the steel of the present invention, and in a case where formula (i) is satisfied, that is, a case where the left-hand value in formula (i) is not more than 0.80, sufficient corrosion resistance as a steel for an anchor chain can be secured. Therefore, the left-hand value in formula (i) is 0.80 or less. In addition, in order to secure favorable corrosion resistance, the left-hand value in formula (i) is preferably 0.77 or less, and more preferably is 0.75 or less. The left-hand value in formula (i) is further preferably 0.73 or less, even more preferably is 0.71 or less, and still more preferably is 0.70 or less. On the other hand, in a case where the steel of the present invention does not satisfy formula (i), the corrosion resistance may not be sufficient and use as an anchor chain for a long time period may be difficult.

Further, from the viewpoint of producibility, it is also necessary for the present invention to satisfy the following formula (ii).

$$Cu/Ni \leq 5.0 \quad ...(ii)$$

Formula (ii) represents the producibility of the steel of the present invention, and in a case where the steel satisfies formula (ii), the steel can be produced without difficulty as a steel for an anchor chain. On the other hand, if the steel does not satisfy formula (ii), production may be difficult because surface cracks and the like may occur due to embrittlement during casting or during rolling.

Note that, each symbol of an element in the above formulas (i) and (ii) represents a content (mass%) of the corresponding element that is contained in the steel, with a value of a symbol being taken as zero if the corresponding element is not contained.

In the present invention, after forming the steel into the shape of an anchor chain, a coating (coating film) may be formed on the surface. In other words, an anti-corrosive coating layer is formed on the surface of the anchor chain. The kind of anti-corrosive coating layer is not limited, and a common anti-corrosive coating layer may be used. Specific examples of the anti-corrosive coating layer include a plating film as exemplified by a Zn plating film, an Al plating film, or a Zn-Al plating film, a thermal sprayed film as exemplified by a Zn sprayed film or an Al sprayed film, and a common coating film as exemplified by a vinyl butyral-based film, an epoxy-based film, a urethane-based film, a phthalic acid-based film, a fluorine-based film, an oil paint film, or a bitumen-based film.

2. Regarding Evaluation of Properties

2-1. Regarding corrosion resistance

In the present invention, the properties with respect to corrosion resistance and wear resistance are evaluated. The corrosion resistance is evaluated using a corrosion test described hereunder. Specifically, an actual corrosion environment of an anchor chain is simulated, and in the corrosion test, a treatment consisting of a seawater immersion process and a drying and wetting process is taken as a single cycle, and the treatment is performed for eight cycles (approximately 8 weeks).

In the seawater immersion process, once per week (every seven days) a test specimen is immersed for 15 minutes in artificial seawater at a temperature of 35°C. The composition of the artificial seawater used for the test is NaCl: 2.45%, $MgCl_2$: 1.11%, $Na_2SO_4$: 0.41%, $CaCl_2$: 0.15%, KCl: 0.07%, $NaHCO_3$: 0.02% and KBr: 0.01%. Note that, the symbol "%" in the aforementioned composition of the artificial seawater represents mass percent.

In the drying and wetting process, the following two processes are carried out inside a chain locker: a drying process which simulates a state of comparatively low humidity; and a wetting process which simulates a state of comparatively high humidity. In the drying process, the test specimen is held for four hours in an environment in which the temperature is 60°C and relative humidity is 65% RH, and in the wetting process the test specimen is held for four hours in an environment in which the temperature is 60°C and relative humidity is 90% RH

After the seawater immersion process, during the period until the next seawater immersion process is performed, a treatment was performed in which the drying process and the wetting process are alternately repeated. In this case, when a process in which the drying process and the wetting process are each performed once is taken as one time, it means that the aforementioned treatment is performed three times per day.

After the aforementioned corrosion test, the amount of decrease in the diameter of the test specimen is measured with vernier calipers. Measurement of the test specimen is performed by, for example, in a case where the test specimen length is 100 mm, performing measurement at positions that are 30 mm from the top end and bottom end of the test specimen and also performing measurement at the central part of the test specimen, that is, at a position which is 50 mm from the top end. In addition, with respect to each of the aforementioned positions, the size of the diameter at a position orthogonal to the relevant position is also similarly measured. In other words, the size of the diameter is measured at six positions for each specimen, and the size of the diameter after the corrosion test is calculated based on the average value of the values obtained at the six positions. Next, a difference between the size of the original diameter and the size of the diameter after the corrosion test is taken as the amount of decrease (mm) in the diameter. Note that, in the present invention, in a case where the amount of decrease in the diameter is 0.9 mm or less, it is determined that the steel has sufficient corrosion resistance as an anchor chain.

2-2. Regarding wear resistance

As is evident from the fact that wear occurs that is caused by chains rubbing together, wear occurs at the surface of the steel material. Therefore, in the present invention, wear resistance is evaluated using the hardness of the outer layer (hereunder, referred to simply as "surface hardness") as one index. Note that, regarding the conditions of a hardness test for calculating the surface hardness, the hardness test is performed in accordance with JIS Z 2244: 2009, with the test force being set to 9.8 N (1 kgf).

With respect to the hardness measurement positions, in the case of a steel bar, the Vickers hardness is measured at three points at positions 0.5 mm, 1.0 mm, 1.5 mm, 2.0 mm, 2.5 mm and 3.0 mm in the direction of the center of the diameter from the surface of the steel material, respectively, that is, the Vickers hardness is measured at a total of 18 points, and the average value of the values obtained at all of the measurement points is taken as the surface hardness. If the surface hardness is more than 200, it is determined that the wear resistance is good.

3. Production Method

An ingot having the aforementioned chemical composition is produced by a continuous casting process. The ingot may also be an ingot produced by an ingot-making process (see JIS G 0203: 2009). Next, the obtained ingot is subjected to holding and hot rolling (steel bar rolling) within a temperature range of 800 to 1250°C, to thereby form a steel bar. In the present invention the diameter of the steel bar is not particularly limited, and for example is set within the range of 50 to 120 mm. Further, among the hot rolling processes, finish rolling is performed at 800°C or higher. Next, the obtained steel bar is cooled to room temperature by air-cooling or by being allowed to cool.

Note that, in the present invention, a heat treatment may be performed after the aforementioned cooling. In addition, after the heat treatment, a surface treatment such as shotblasting may be performed. Subsequently, the steel bar produced as described above is adopted as a starting material, and is heated to within a range of 600 to 1100°C and thereafter subjected to bending, is then joined by flash butt welding, and the welded joint is subjected to deburring to thereby produce a link. This process is repeated to form a chain of a predetermined length. Note that, as necessary, studs can be attached by welding. Thereafter, quenching and tempering are performed. The quenching temperature is within a range of 800 to 1100°C and the quenching time period is 10 minutes or more, and thereafter cooling is performed by water-cooling. The tempering temperature is within a range of 450 to 750°C and the tempering time period is 10 minutes or more, and thereafter cooling is performed by water-cooling. A chain for mooring having a desired shape is produced by these processes.

Hereunder, the present invention is described specifically by way of examples, although the present invention is not limited to these examples.

EXAMPLES

Ingots obtained by performing continuous casting after melting steels having the chemical compositions shown in Table 1 were subjected to blooming to form blooms. Next, each bloom was subjected to hot rolling (steel bar rolling). In the hot rolling, the holding temperature for the bloom was set to 1250°C, and the starting material was rolled at a temperature of 1050°C or higher until becoming a diameter of 25 mm, and was then subjected to air-cooling to room temperature.

Next, each obtained steel bar was subjected to a heat treatment. In the heat treatment, quenching was performed at 900°C for 15 minutes followed by water-cooling, and thereafter tempering was performed at 638°C for 20 minutes followed by water-cooling. After the aforementioned heat treatment, a test specimen of 20 mm in diameter × 100 mm in length was extracted, and the surface of the test specimen was subjected to shotblasting.

(Surface cracks evaluation)

For each of the aforementioned test specimens, first, visual inspection of the surface was performed to evaluate whether or not there were surface cracks. Thereafter, the test specimens were subjected to the corrosion test described hereunder.

(Corrosion test)

For the corrosion test for evaluating corrosion resistance, a test was performed in accordance with the method described in Japanese Patent Application No. 2017-240413 so that an actual corrosion environment of an anchor chain could be simulated. Specifically, in the corrosion test, a treatment consisting of a seawater immersion process and a drying and wetting process was taken as a single cycle, and the treatment was performed for eight cycles (approximately 8 weeks).

In the seawater immersion process, once per week (every seven days) the test specimen was immersed for 15 minutes in artificial seawater at a temperature of 35°C. The composition of the artificial seawater used for the test was NaCl: 2.45%, $MgCl_2$: 1.11%, $Na_2SO_4$: 0.41%, $CaCl_2$: 0.15%, KCl: 0.07%, $NaHCO_3$: 0.02% and KBr: 0.01%. Note that, the symbol "%" in the aforementioned composition of the artificial seawater represents mass percent.

In the drying and wetting process, the following two processes were carried out inside a chain locker: a drying process which simulated a state of comparatively low humidity; and a wetting process which simulated a state of comparatively high humidity. In the drying process, the test specimen was held for four hours in an environment in which the temperature was 60°C and relative humidity was 65% RH, and in the wetting process the test specimen was held for four hours in an environment in which the temperature was 60°C and relative humidity was 90% RH

After the seawater immersion process, during the period until the next seawater immersion process was performed, a treatment in which the drying process and the wetting process were alternately repeated was performed. In this case, when a process in which the drying process and the wetting process are each performed once is taken as one time, it means that the aforementioned treatment was performed three times per day.

After the aforementioned corrosion test, the amount of decrease in the diameter of the test specimen was measured with vernier calipers. Measurement of the test specimen was conducted by performing measurement at positions that were 30 mm from the top end and bottom end of the test specimen and also performing measurement at the central part of the test specimen, that is, a position which was 50 mm from the top end. In addition, with respect to each of the aforementioned positions, the size of the diameter at a position orthogonal to the relevant position was also similarly measured. In other words, the size of the diameter was measured at six positions for each specimen, and the size of the diameter after the corrosion test was calculated based on the average value of the values obtained at the six positions. Next, the difference between the size of the original diameter and the size of the diameter after the corrosion test was taken as the amount of decrease (mm) in the diameter. Note that, in the present invention, in a case where the amount of decrease in the diameter was 0.9 mm or less, it was determined that the steel had sufficient corrosion resistance as an anchor chain.

(Hardness test)

The surface hardness was measured in order to evaluate the wear resistance. Regarding the conditions of the hardness test for calculating the surface hardness, the hardness test was performed in accordance with JIS Z 2244: 2009, with the test force being set to 9.8 N (1 kgf). With respect to the hardness measurement positions, in the case of a steel bar, the Vickers hardness was measured at three points at positions 0.5 mm, 1.0 mm, 1.5 mm, 2.0 mm, 2.5 mm and 3.0 mm in the direction of the center of the diameter from the surface of the steel material, respectively, that is, the Vickers hardness was measured at a total of 18 points, and the average value of the values obtained at all of the measurement points was taken as the surface hardness. If the surface hardness was more than 200, it was determined that the wear resistance was good.

The results of the aforementioned tests are shown in Table 1.

[Table 1]

Table 1

| Test No. | Chemical composition (mass%, balance: Fe and impurities) | | | | | | | | | | | | | | | | | | | | | Left-hand value in formula (i)† | Left-hand value in formula (ii)‡ | Existence of Surface Cracks | Diameter Decrease Amount (mm) | Outer Layer Hardness (Hv) | |
|---|---|---|---|---|---|---|---|---|---|---|---|---|---|---|---|---|---|---|---|---|---|---|---|---|---|---|---|
| | C | Si | Mn | P | S | Al | N | Cu | Ni | Cr | Sn | Sb | Mo | W | V | Ca | Mg | REM | Nb | Ti | B | | | | | | |
| 1 | 0.31 | 0.24 | 1.80 | 0.018 | 0.006 | 0.035 | 0.0043 | 0.30 | 0.10 | 0.06 | - | - | - | - | - | - | - | - | - | - | - | 0.59 | 3.0 | No | 0.65 | 224 | Inventive example |
| 2 | 0.30 | 0.22 | 1.74 | 0.015 | 0.004 | 0.032 | 0.0050 | 0.54 | 0.20 | 0.03 | - | - | - | - | - | - | - | - | - | - | - | 0.26 | 2.7 | No | 0.49 | 230 | |
| 3 | 0.32 | 0.26 | 2.16 | 0.023 | 0.003 | 0.040 | 0.0038 | 0.08 | 1.05 | 0.05 | - | - | - | - | - | - | - | - | - | - | - | 0.56 | 0.1 | No | 0.69 | 223 | |
| 4 | 0.16 | 0.25 | 1.26 | 0.019 | 0.010 | 0.034 | 0.0080 | 0.15 | 0.07 | 0.04 | - | - | - | - | - | - | - | - | - | - | - | 0.79 | 2.1 | No | 0.76 | 211 | |
| 5 | 0.29 | 0.11 | 1.65 | 0.010 | 0.008 | 0.028 | 0.0037 | 0.32 | 3.60 | 0.05 | 0.23 | - | - | - | - | - | - | - | - | - | - | -0.18 | 0.1 | No | 0.21 | 239 | |
| 6 | 0.31 | 0.28 | 1.70 | 0.036 | 0.012 | 0.030 | 0.0041 | 0.50 | 0.31 | 0.02 | - | 0.16 | - | - | - | - | - | - | - | - | - | 0.29 | 1.6 | No | 0.53 | 229 | |
| 7 | 0.20 | 0.07 | 1.02 | 0.018 | 0.007 | 0.015 | 0.0013 | 0.72 | 0.28 | 0.09 | - | - | 0.41 | - | - | - | - | - | - | - | - | 0.05 | 2.6 | No | 0.30 | 223 | |
| 8 | 0.31 | 0.19 | 1.90 | 0.017 | 0.004 | 0.052 | 0.0037 | 0.48 | 0.21 | 0.08 | - | - | - | 0.21 | - | - | - | - | - | - | - | 0.34 | 2.3 | No | 0.39 | 231 | |
| 9 | 0.32 | 0.21 | 1.88 | 0.071 | 0.009 | 0.035 | 0.0036 | 0.33 | 0.12 | 0.06 | - | - | - | - | 0.50 | - | - | - | - | - | - | 0.54 | 2.8 | No | 0.64 | 226 | |
| 10 | 0.18 | 0.46 | 1.81 | 0.020 | 0.035 | 0.029 | 0.0040 | 0.16 | 0.04 | 0.05 | - | - | - | - | - | 0.0035 | - | - | - | - | - | 0.78 | 4.0 | No | 0.74 | 217 | |
| 11 | 0.30 | 0.20 | 1.77 | 0.015 | 0.003 | 0.031 | 0.0042 | 0.35 | 0.16 | 0.04 | - | - | - | - | - | - | 0.0020 | - | - | - | - | 0.51 | 2.2 | No | 0.62 | 225 | |
| 12 | 0.31 | 0.24 | 1.80 | 0.019 | 0.005 | 0.032 | 0.0039 | 0.55 | 0.22 | 0.06 | - | - | - | - | - | - | - | 0.0026 | - | - | - | 0.25 | 2.5 | No | 0.48 | 231 | |
| 13 | 0.32 | 0.22 | 1.70 | 0.021 | 0.004 | 0.031 | 0.0041 | 0.26 | 0.11 | 0.05 | - | - | - | - | - | - | - | - | 0.032 | - | - | 0.64 | 2.4 | No | 0.71 | 223 | |
| 14 | 0.31 | 0.22 | 1.69 | 0.013 | 0.004 | 0.034 | 0.0042 | 0.16 | 0.06 | 0.05 | - | - | - | - | - | - | - | - | - | 0.055 | - | 0.78 | 2.7 | No | 0.79 | 220 | |
| 15 | 0.31 | 0.23 | 1.83 | 0.016 | 0.005 | 0.041 | 0.0041 | 0.33 | 0.14 | 0.06 | - | - | - | - | - | - | - | - | - | - | 0.0030 | 0.54 | 2.4 | No | 0.66 | 226 | |
| 16 | 0.27 | 0.27 | 1.81 | 0.015 | 0.001 | 0.039 | 0.0036 | 0.19 | 0.07 | 0.05 | 0.12 | - | - | 0.15 | - | - | - | - | - | - | - | 0.74 | 2.7 | No | 0.73 | 221 | |
| 17 | 0.24 | 0.17 | 1.81 | 0.017 | 0.003 | 0.040 | 0.0035 | 0.51 | 0.23 | 0.07 | - | 0.28 | 0.15 | - | - | - | - | - | - | - | - | 0.30 | 2.2 | No | 0.51 | 228 | |
| 18 | 0.20 | 0.21 | 1.78 | 0.018 | 0.002 | 0.036 | 0.0040 | 0.31 | 0.15 | 0.05 | - | - | - | - | - | - | - | - | 0.008 | 0.015 | - | 0.56 | 2.1 | No | 0.68 | 222 | |
| 19 | 0.32 | 0.22 | 1.79 | 0.024 | 0.002 | 0.032 | 0.0038 | - * | - * | 0.06 | - | - | - | - | - | - | - | - | - | - | - | 1.01 * | - | No | 1.21 | 216 | Comparative example |
| 20 | 0.31 | 0.19 | 1.59 | 0.021 | 0.005 | 0.031 | 0.0041 | 0.23 | 0.03 | 0.05 | - | - | - | - | - | - | - | - | - | - | - | 0.69 | 7.7 * | Yes | 0.72 | 219 | |
| 21 | 0.15 | 0.12 | 0.75 * | 0.015 | 0.003 | 0.035 | 0.0039 | 0.14 | 0.04 | 0.02 | - | - | - | - | - | - | - | - | - | - | - | 0.80 | 3.5 | No | 0.80 | 199 | |
| 22 | 0.31 | 0.20 | 1.83 | 0.017 | 0.003 | 0.029 | 0.0045 | 0.11 | 0.04 | 0.09 | - | - | - | - | - | - | - | - | - | - | - | 0.86 * | 2.8 | No | 1.06 | 219 | |

† $(1-1.35Cu)(1-0.37Ni)+0.25Cr \leq 0.80$   (i)

‡ $Cu/Ni \leq 5.0$   (ii)

* indicates the value is outside the range defined by the present invention.

As shown in Table 1, Test Nos. 1 to 18 satisfied the conditions regarding the composition defined in the present invention and also satisfied formula (i) and formula (ii), and therefore the corrosion resistance was good and surface cracks also did not occur. The wear resistance was also good. In contrast, because Test Nos. 19 and 22 did not satisfy formula (i), the result was that the corrosion resistance was poor. Further, because Test No. 20 did not satisfy formula (ii), surface cracks occurred. In Test No. 21, because the content of Mn was below the range defined in the present invention, the result was that the wear resistance was poor.

**Claims**

1. A steel for an anchor chain having a chemical composition consisting of, in mass%:

   C: 0.15 to 0.45%,
   Si: 0.6% or less,
   Mn: 1.00 to 2.50%,
   P: 0.1% or less,
   S: 0.05% or less,
   Al: 0.1% or less,
   N: 0.01% or less,
   Cu: 0.01 to 1.0%,
   Ni: 0.01 to 5.0%,
   Cr: 0.1% or less,
   Sn: 0 to 0.5%,
   Sb: 0 to 0.5%,
   Mo: 0 to 1.0%,
   W: 0 to 1.0%,
   V: 0 to 1.0%,
   Ca: 0 to 0.01%,
   Mg: 0 to 0.01%,
   REM: 0 to 0.01%,
   Nb: 0 to 0.1%,
   Ti: 0 to 0.1%,
   B: 0 to 0.01%, and
   a balance: Fe and impurities,
   and satisfying formulas (i) and (ii) below:

$$(1-1.35Cu)(1-0.37Ni)+0.25Cr \leq 0.80 \quad ...(i)$$

$$Cu/Ni \leq 5.0 \quad ...(ii)$$

   where, each symbol of an element in the above formulas represents a content (mass%) of the corresponding element that is contained in the steel, with a value of a symbol being taken as zero if the corresponding element is not contained.

2. The steel for an anchor chain according to claim 1, wherein:
   the chemical composition contains one or more elements selected from, in mass%:

   Sn: 0.01 to 0.5%,
   Sb: 0.01 to 0.5%,
   Mo: 0.01 to 1.0%,
   W: 0.01 to 1.0%,
   V: 0.01 to 1.0%,
   Ca: 0.0001 to 0.01%,
   Mg: 0.0001 to 0.01%, and
   REM: 0.0001 to 0.01%.

3. The steel for an anchor chain according to claim 1 or 2, wherein:
the chemical composition contains one or more elements selected from, in mass%:

  Nb: 0.001 to 0.1%,
  Ti: 0.001 to 0.1%, and
  B: 0.0001 to 0.01%.

4. An anchor chain that uses a steel according to any one of claims 1 to 3.

5. The anchor chain according to claim 4, comprising an anti-corrosive coating layer on a surface of the anchor chain.

## INTERNATIONAL SEARCH REPORT

| International application No. |
| --- |
| PCT/JP2019/002441 |

**A. CLASSIFICATION OF SUBJECT MATTER**
Int. Cl. C22C38/00(2006.01)i, C22C38/60(2006.01)i, C21D8/06(2006.01)n,
C21D9/00(2006.01)n

According to International Patent Classification (IPC) or to both national classification and IPC

**B. FIELDS SEARCHED**

Minimum documentation searched (classification system followed by classification symbols)
Int. Cl. C22C38/00, C22C38/60, C21D8/06, C21D9/00

Documentation searched other than minimum documentation to the extent that such documents are included in the fields searched
Published examined utility model applications of Japan   1922-1996
Published unexamined utility model applications of Japan  1971-2019
Registered utility model specifications of Japan      1996-2019
Published registered utility model applications of Japan  1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-95742 A (KOBE STEEL, LTD.) 01 June 2017 (Family: none) | 1-5 |
| A | WO 2007/072836 A1 (KITO CORPORATION) 28 June 2007, & US 2009/0275435 A1 & EP 1964935 A1 & CN 101341263 A | 1-5 |
| A | CN 1281906 A (JIANGYIN XINGCHENG IRON & STEEL CO. LTD.) 31 January 2001 (Family: none) | 1-5 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04.04.2019 | 16.04.2019 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**14**

**EP 3 744 872 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61210153 A

- JP 2017240413 A